# EUROPÄISCHE PATENTANMELDUNG

(11) **EP 1 157 600 A1**
(43) Veröffentlichungstag der Anmeldung: **28.11.2001**
(21) Anmeldenummer: 00119690.6
(22) Anmeldetag: 08.09.2000
(51) Int. Cl.: A01B 3/46, A01B 15/12

(54) **Aufsattel- bzw. Anhängedrehpflug**

(30) Priorität: 20.05.2000 DE 10025184
(71) Anmelder: Lemken GmbH & Co. KG, 46519 Alpen (DE)
(72) Erfinder: Meurs, Wilhelm, 46519 Alpen (DE)
(74) Vertreter: Schulte, Jörg, Dipl.-Ing.

(57) **Zusammenfassung**

Die Erfindung betrifft einen Aufsattel- bzw. Anhängedrehpflug (1) mit einem Pflugrahmen (6,32) und einem Fahrwerk (4), wobei der Pflugrahmen geteilt und aus einem vorderen (6) und einem hinteren Pflugrahmen (32) besteht. Die beiden Pflugrahmenteile (6,32) sind über einen geteilten Verbindungsrahmen (14) mit Gelenk miteinander verbunden. Das Hinterteil (20) des Verbindungsrahmens (14) ist zusammen mit dem hinteren Pflugrahmen (32) permanent aushebbar ausgebildet.

## Beschreibung

Die Erfindung betrifft einen Aufsattel- oder Anhängedrehpflug mit einer Verbindungseinrichtung für die Verbindung mit einem Zugfahrzeug, mit einem vorderen Pflugrahmen mit mindestens zwei Pflugkörpern sowie mit einem hinteren Pflugrahmen mit mindestens zwei Pflugkörpern, mit einem Verbindungsrahmen, der vorne mit dem vorderen Pflugrahmen und hinten mit dem hinteren Pflugrahmen verbunden ist und mit einem Fahrwerk mit mindestens einem Stützrad, das über Schwenklagerungen mit dem Verbindungsrahmen verbunden ist.

Aufsattel- oder Anhängedrehpflüge mit vorderem und zusätzlichem Pflugrahmen sind bekannt (EP 566 821 A1). Der vordere und der hintere Pflugrahmen sind dabei über einen Verbindungsrahmen miteinander verbunden und werden im hinteren Drittel über ein Fahrwerk getragen. In schweren Bodenverhältnissen oder wenn das Vorgewende gepflügt wird, das in der Regel aufgrund der auf dem Vorgewende durchgeführten Kehrfahrten verfestigt ist, reicht die Zugkraft des Traktors oft nicht aus, den mehrscharigen Drehpflug zu ziehen. Durch das Ausheben des hinteren Pflugrahmens wird der erforderliche Zugkraftbedarf reduziert, sodass dann z.B. der Aufsatteldrehpflug auch in schwierigen Bodenverhältnissen mit dem vorhandenen Traktor genutzt werden kann. Der hintere Pflugrahmen wird dazu je nach Pflugstellung, entweder rechtswendend oder linkswendend, über je einen Hydraulikzylinder ausgehoben. Für das Drehen des Pflugrahmens, muss der hintere Pflugrahmen immer wieder zurückgeschwenkt, gedreht und dann wieder erneut ausgeschwenkt werden. Das ist sehr umständlich und birgt die Gefahr in sich, dass der Pflug beschädigt wird, wenn vor dem Drehen des Pflugrahmens vergessen wird, den hinteren Pflugrahmen wieder zurückzuschwenken.

Der Erfindung liegt daher die Aufgabe zugrunde, einen gattungsgemäßen Aufsattel- oder Anhängedrehpflug so auszubilden, dass der zusätzliche Pflugrahmen für bestimmte Anwendungsfälle einfach und kostengünstig auszuheben ist und auch während des Drehvorganges in dieser ausgehobenen Stellung verbleibt und nicht immer wieder zurückgeschwenkt werden muss.

Diese Aufgabe wird gemäß der Erfindung dadurch gelöst, dass die Schwenklagerung für den vorderen Pflugrahmen am Vorderteil eines Verbindungsrahmens vorgesehen ist, der zweiteilig ausgebildet ist, während die Schwenklagerung für den hinteren Pflugrahmen am Hinterteil des Verbindungsrahmens vorgesehen ist, wobei das Vorderteil und das Hinterteil über ein mindestens zwei Freiheitsgrade zulassendes Gelenk miteinander verbunden sind und dass am Fahrwerk ein Kniehebel über die Querachse gelagert ist, der über mindestens ein Stellteil verschwenkbar ausgebildet ist.

Durch diese Ausführung der Verbindung beider Pflugrahmen und die Aushebung über einen Kniehebel wird der hintere Pflugrahmen kinematisch einfach und mit geringen Bauteilbelastungen ausgehoben. Dies gilt insbesondere dann, wenn der Kniehebel das Hinterteil des Verbindungsrahmens und damit den hinteren Pflugrahmen über eine oder mehrere Streben, die zum einen im Abstand zur Querachse am Kniehebel und zum anderen am Hinterteil im Abstand zum Gelenk angreifen und um das Gelenk hochschwenkend ausgebildet ist.

Erfindungsgemäß ist weiter vorgesehen, dass das Vorderteil und das Hinterteil des Verbindungsrahmens über das Gelenk mit kulissenförmiger Führung mit Achse kardanisch, verdrehfest und begrenzt verschiebbar miteinander verbunden sind. Diese Ausbildung begünstigt ein Drehen des Pflugrahmens mit ausgehobenem und nach oben abgewinkeltem hinteren Pflugrahmen. Die besondere kardanische und kulissenförmige Führung erlaubt es, dass trotz der nicht achsparallelen Anordnung der Schwenklagerungen für den vorderen und hinteren Pflugrahmen zueinander, der gesamte Pflugrahmen gedreht werden kann.

Erfindungsgemäß ist weiter vorgesehen, dass das Stellteil als Hydraulikzylinder ausgebildet ist. Über einen oder mehrere Hydraulikzylinder kann der hintere Pflugrahmen einfach ausgehoben oder wieder abgesenkt werden. Aufgrund der günstigen Hebelverhältnisse können Hydraulikzylinder mit überraschend kleinem Kolbendurchmesser eingesetzt werden.

Weiter ist vorgesehen, dass die Verschiebbarkeit des Vorderteils und des Hinterteils des Verbindungsrahmens zueinander durch mindestens einen Anschlag begrenzbar ausgebildet ist. Durch diese Maßnahme ist es möglich, dass sich der hintere zusätzliche Pflugrahmen während der Arbeit dem Boden vorteilhaft anpassen kann. Die kardanische und kulissenförmige Führung lässt so eine vertikale und horizontale Anpassbarkeit zu. Während des Aushebevorganges legt sich die Kulisse gegen den Anschlag und bildet dann den Drehpunkt um den das Hinterteil des Verbindungsrahmens zusammen mit dem hinteren Pflugrahmen über die Hydraulikzylinder hochgeschwenkt werden kann.

Zur Reduzierung von Kräften ist erfindungsgemäß vorgesehen, dass der Kniehebel um eine Querachse schwenkbar mit dem Ausleger des Fahrwerkes und im Abstand zur Querachse über eine weitere Querachse schwenkbar mit den Streben verbunden sind, wobei die Streben am gegenüberliegenden Ende mit der hinteren Schwenklagerung über eine Querachse verbunden sind, und zwar im Abstand zum Gelenk der kulissenförmigen Führung. Über diese besondere Kniehebelversion werden insbesondere die Kräfte auf den hinteren Pflugrahmen geringgehalten. Über den Kniehebel und die Streben wird der zusätzliche Pflugrahmen auf einfache Weise ausgehoben.

Schließlich ist erfindungsgemäß vorgesehen, dass am Kniehebel im Abstand zur Querachse des Kniehebels eine Zugachse mit Rolle angeordnet ist, mit der der hintere Pflugrahmen mittelbar über das Hinterteil des Verbindungsrahmens, die Schwenklagerung und den Stützarm ziehbar mit dem Vorderteil des Verbindungsrahmens verbunden ist. Während der Pflugarbeit wird der hintere Pflugrahmen über seinen Stützarm gezogen, und zwar über den Kniehebel der mit einer Zugachse mit Rolle ausgerüstet ist. Die unterhalb des Pflugrahmens angeordnete Zugachse verhindert ein Hochschwenken des hinteren Pflugrahmens. Dadurch dass die Zugachse am Kniehebel angeordnet ist, wird sie zusammen mit dem hinteren Pflugrahmen so verschwenkt, dass sie eine Aushubbewegung des hinteren Pflugrahmens nicht behindert. Durch diese einfache Maßnahme erübrigen sich komplizierte und anfällige Einrichtungen, die die ziehende Einrichtung des hinteren Pflugrahmens für den Aushebevorgang unwirksam machen müssten. Selbstverständlich können die einzelnen Stelleinrichtungen und Hydraulikzylinder über sogenannte computerunterstützte Folgeschaltungen so gesteuert werden, dass der Aushebevorgang und der Drehvorgang bei Erreichen des Vorgewendes und der Drehvorgang und Absenkvorgang beim Wiedereintreten in die Furche vollautomatisch erfolgt, und zwar in der Reihenfolge und in dem Abstand, wie es der jeweilige Einsatzfall erfordert.

Damit zeichnet sich die Erfindung vor allem dadurch aus, dass ein Pflug geschaffen ist, bei dem bei Bedarf der zusätzliche Pflugrahmen ohne großen Aufwand in der ausgehobenen Stellung gehalten werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Draufsicht eines Aufsattel- oder Anhängepfluges in Arbeitsstellung,
- Figur 2: eine Seitenansicht eines Aufsattel- oder Anhängepfluges in Transportstellung,
- Figur 3: den Verbindungsrahmen in perspektivischer Darstellung,
- Figur 4: eine perspektivische Darstellung des Verbindungsrahmens in Transportstellung und
- Figur 5: eine Detailansicht der Aushebevorrichtung und des Regelgetriebes.

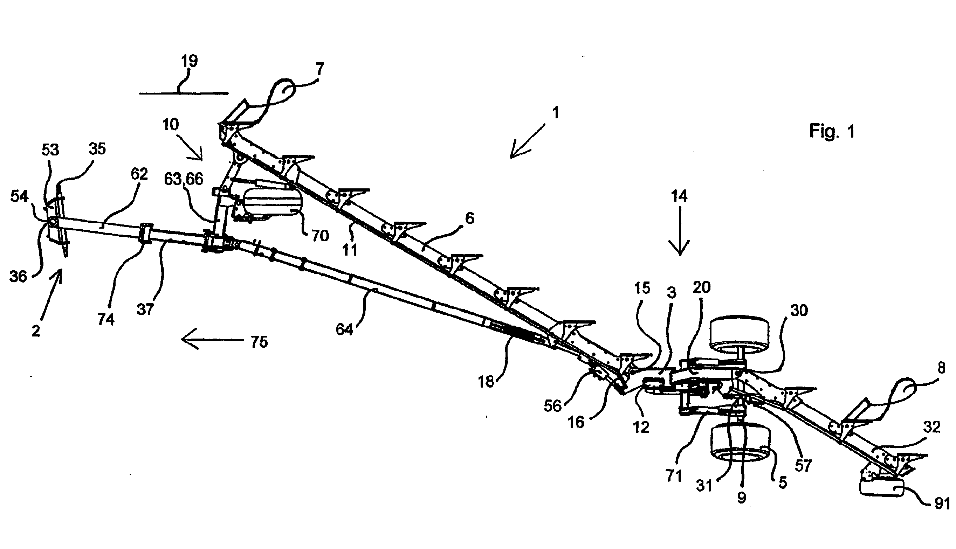

Figur 1 zeigt den erfindungsgemäßen Aufsatteldrehpflug 1 mit einer Verbindungseinrichtung 2. Die Verbindungseinrichtung 2 weist einen Pflugturm 53 mit den unteren Anlenkpunkten 35 und dem oberen Anlenkpunkt 36 für die Verbindung mit einem Traktor auf. Um eine annähernd senkrechte Achse 54 ist der Pflugrahmen 6 schwenkbar mit einer Zugeinrichtung 62 verbunden, die um eine den Zugpunkt 74 bildende, horizontale und quer angeordnete Achse schwenkbar mit einem Traglenker 37 verbunden ist, der den Wendelenker 66 der Drehvorrichtung 63 trägt. Der Wendelenker 66 ist über die Konsole 67 um eine Querachse 69 schwenkbar mit dem Traglenker 37 verbunden. Der Traglenker 37 weist hinter der Konsole 67 eine Stelleinrichtung 18 auf, die um eine annähernd senkrecht angeordnete Achse mit dem Traglenker 37 verbunden ist. Die Stelleinrichtung 18 ist Bestandteil des Zugrahmens 64, der hinten über ein Kreuzgelenk 17 mit dem Zugarm 65 verbunden ist, der um eine annähernd waagerechte und in Längsrichtung angeordnete Schwenkachse 68 schwenkbar mit dem Pflugrahmen 6 verbunden ist. Der Pflugrahmen 6 weist Pflugkörper 7 auf und ist hinten über eine in Arbeitsstellung senkrechte Achse 15 mit dem Verbindungsrahmen 14 verbunden.

Am hinteren Ende des Verbindungsrahmens 14 ist ein hinterer Pflugrahmen 32 über eine in Arbeitsstellung senkrechte Achse 30 angeordnet. Der vordere Pflugrahmen 6 weist eine Verbindungsstange 11 auf, die über eine Steuerstange 16 und einen Hydraulikzylinder 56 so verbunden ist, dass bei Verstellung des Hydraulikzylinders 56 die Schnittbreite aller Pflugkörper 7 verändert werden kann.

Der Pflugkörper 8 des hinteren Pflugrahmens 32 weist eine Verbindungsstange 33 auf, die über die Steuerstange 31 mit dem Hydraulikzylinder 57 verbunden ist. Bei Verstellung des Hydraulikzylinders 57 werden die Pflugkörper 8 des hinteren Pflugrahmens 32 in ihrer Arbeitsbreite verstellt. Für die unterstützende Tiefenführung des Pfluges ist vorne ein Tastrad 70 und hinten ein Stützrad 91 vorgesehen.

Der Verbindungsrahmen 14 ist zweiteilig ausgebildet und besteht aus einem Vorderteil 3 und einem Hinterteil 20. Das Vorderteil 3 weist eine in Arbeitsrichtung 75 angeordnete waagerechte Schwenklagerung 12 mit Schwenkachse 13 auf, die wiederum mit dem Fahrwerk 4 in Verbindung steht. Das Hinterteil 20 des Verbindungsrahmens 14 weist eine mit der Schwenklagerung 12 vergleichbare Schwenklagerung 40 auf.

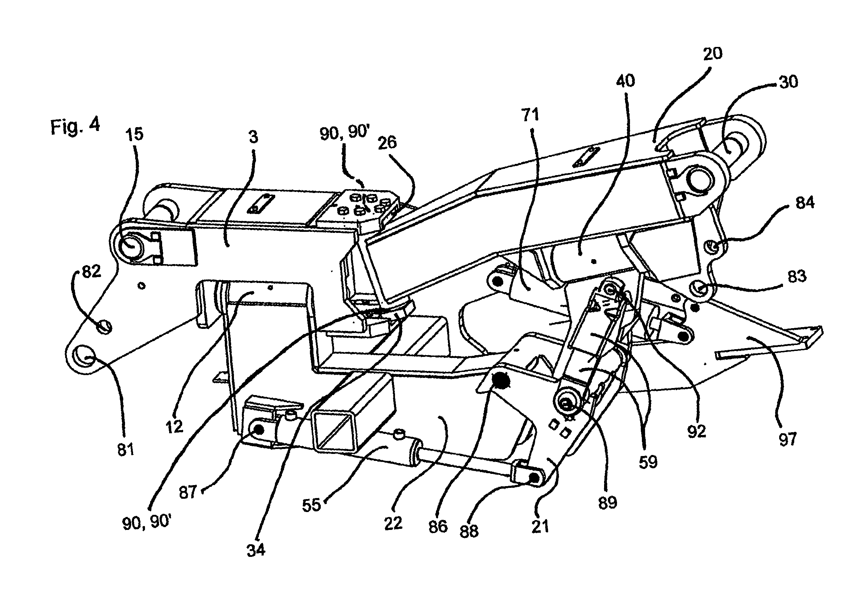

Die beiden Teile 3, 20 des Verbindungsrahmens 14 sind kardanisch, verdrehfest und über eine kulissenförmige Führung 25 verbunden, was insbesondere der Figur 4 zu entnehmen ist. Der vordere Pflugrahmen 6 ist vorne über die Schwenkeinrichtung 10 mit dem Traglenker 37 verbunden. Über die Schwenkeinrichtung 10 kann der Pflug 1 für den Betrieb mit einem Traktor (in der Furche 19) oder mit einer Raupe (Onland) umgestellt werden.

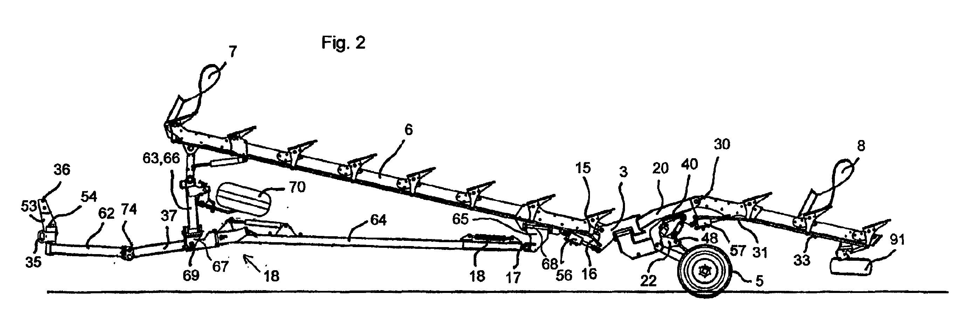

Die Figur 2 zeigt den Aufsatteldrehpflug in Seitenansicht und in halbgedrehter Stellung. Die Stützräder 70 und 91 sind schwenkbar und können jeweils in die entsprechende Arbeitsstellung umschwenken und werden dort selbsttätig arretiert.

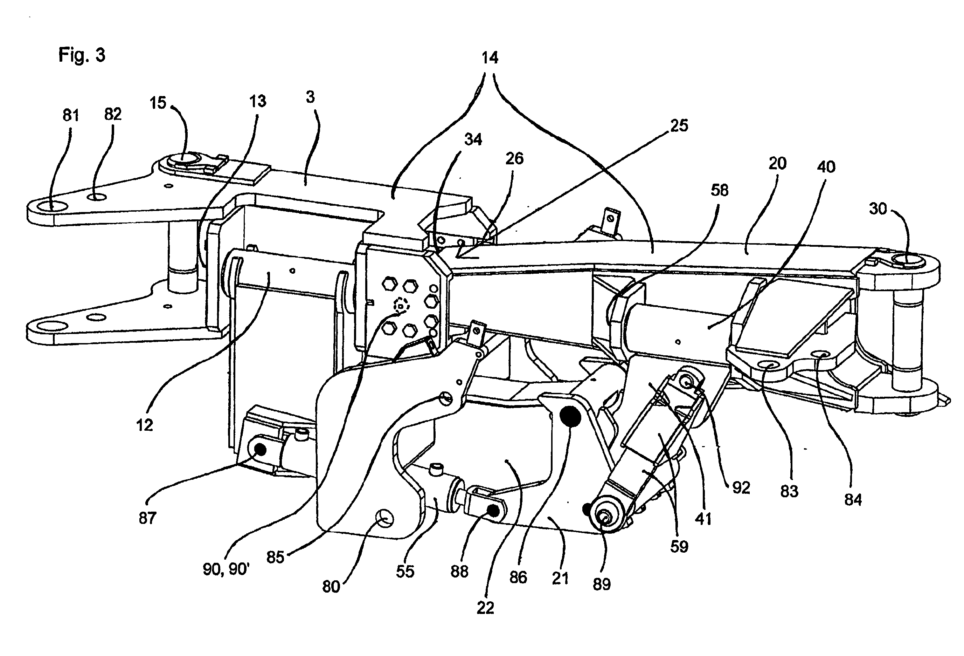

Die Figur 3 zeigt den Verbindungsrahmen 14 mit dem Vorderteil 3 und dem Hinterteil 20. Die beiden Teile 3, 20 des Verbindungsrahmens 14 sind über eine kulissenförmige Führung 25 mit Gelenk 90 mit Achse 90' und Kulisse 34 miteinander verbunden. Über einen Endanschlag 26 wird die Längsverschiebbarkeit des Hinterteils 20 zum Vorderteil 3 begrenzt. Das Vorderteil 3 weist eine Schwenklagerung 12 auf, die Bestandteil des Fahrwerkes 4 ist. Das Fahrwerk 4 weist einen Ausleger 22 auf, der endseitig einen um die Querachse 86 schwenkbaren Kniehebel 21 trägt. Ein Hydraulikzylinder 55 greift mit seinem hinteren Anlenkpunkt 88 im Abstand zur Querachse 86 am Kniehebel 21 an. Mit seinem vorderen Anlenkpunkt 87 ist er mit dem Fahrwerk 4 bzw. mit der Fahrwerksachse 9 verbunden. Im Abstand zur Querachse 86 ist eine untere Achse 89 vorgesehen, an die die Streben 59 angreifen. Die Streben 59 sind mit dem Stützarm 41 und der Schwenklagerung 40 des Hinterteils 20 verbunden. Die Schwenklagerung 40 ist um die Schwenkachse 58 drehbar gelagert.

Bei Betätigung des Hydraulikzylinders 55 dreht sich der Kniehebel 21 um die Querachse 86 und drückt so über die untere Achse 89 und den Streben 59 das Hinterteil 20 um das Gelenk die Achse 90 hoch. Der hintere Pflugrahmen 32, der über die in Arbeitsstellung senkrecht angeordnete Achse 30 und den Anlenkpunkten 83 und 84 mit dem Hinterteil 20 verbunden ist, wird dadurch vollständig ausgehoben. Zur Verdeutlichung wurde der hintere Pflugrahmen 32 in der Figur 3 nicht dargestellt.

Der Vollständigkeit halber wird noch darauf hingewiesen, dass die senkrechte Achse 15 und die Anlenkpunkte 82, 83 am Vorderteil 3 des Verbindungsrahmens 14 für die Verbindung mit dem vorderen Pflugrahmen 6 dienen. Da das Fahrwerk 4 mit seinen Stützrädern 5 die relevanten Bauteile verdecken würde, wurden diese Bauteile ebenfalls in der Figur 3 nicht dargestellt. Die Fahrwerksachse 9 mit den Stützrädern 5 und den Hydraulikzylindern 71 werden über die Anlenkpunkte 80 und 85 mit dem Fahrwerk 4 verbunden.

Die Figur 4 zeigt den Verbindungsrahmen 14 gemäß Figur 3, allerdings in halbgedrehter Arbeitsstellung bzw. Transportstellung und mit ausgehobenem Hinterteil 20. Der ausgefahrene Hydraulikzylinder 55 hat den Kniehebel 21 so weit um die Querachse 86 verschwenkt, dass das Hinterteil 20 über die Streben 59 ausgehoben ist, wodurch der Pflugrahmen 32, der hier nicht dargestellt ist, ausreichend weit ausgehoben wird, und zwar sowohl in Arbeitsstellung als auch in Transportstellung. Ein Herausrutschen des Hinterteils 20 aus dem Vorderteil 3 wird über den Anschlag 26 verhindert. In der Figur 4 wird insbesondere verdeutlicht, wie die Kulisse 34 der kulissenförmigen Führung 25 angeordnet ist. Der Figur 4 ist auch die Anordnung der Hydraulikzylinder 71 des Fahrwerkes 4 zu entnehmen, wobei hier vom Fahrwerk 4 nur der Schwenkrahmen 97 dargestellt ist, der endseitig die Fahrwerksachse 9 aufnimmt, die ebenfalls nicht dargestellt ist.

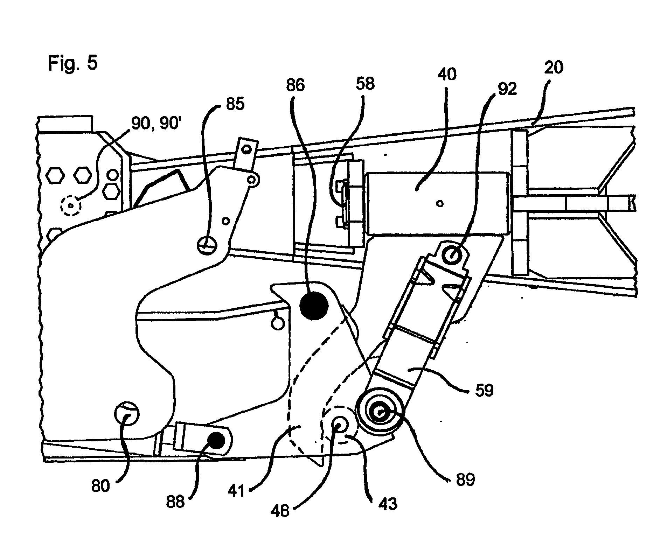

Die Figur 5 verdeutlicht, dass das Hinterteil 20 und damit der hintere Pflugrahmen 32 über einen Stützarm 41 gezogen wird, der mit der Zugachse 48 mit Rolle 43 in Verbindung steht, die am Kniehebel 21 gelagert ist. Der Kniehebel 21 ist schwenkbar um die Querachse 86 angeordnet und über den hinteren Anlenkpunkt 88 mit dem Hydraulikzylinder 55 verbunden. Ein Ausheben des Hinterteils 20 bzw. des hinteren Pflugrahmens 32 wäre jetzt nicht möglich, da die Zugachse 48 ein Hochschwenken des Pflugrahmens 32 verhindern würde. Wenn der Kniehebel 21 verschwenkt wird, so wird über die untere Achse 89 die Strebe 59 nach oben bewegt und schwenkt damit das Hinterteil 20 begünstigt durch die obere Achse 92 ebenfalls hoch. Gleichzeitig wird aber auch die Zugachse 48 mit Rolle 43 gleichsinnig mitbewegt, so dass sie den Ausschwenkvorgang des Pflugrahmens 32 bzw. des Hinterteils 20 nicht behindert. Mit 81 ist der Anlenkpunkt für den Hydraulikzylinder 56 bezeichnet.

Alle genannten Merkmale, auch die den Zeichnungen allein zu entnehmenden, werden allein und in Kombination als erfindungswesentlich angesehen.

## Patentansprüche

1. Aufsattel- oder Anhängedrehpflug mit einer Verbindungseinrichtung (2) für die Verbindung mit einem Zugfahrzeug, mit einem vorderen Pflugrahmen (6) mit mindestens zwei Pflugkörpern (7, 8) sowie mit einem hinteren Pflugrahmen (32) mit mindestens zwei Pflugkörpern (8), mit einem Verbindungsrahmen (14), der vorne mit dem vorderen Pflugrahmen (6) und hinten mit dem hinteren Pflugrahmen (32) verbunden ist und mit einem Fahrwerk (8) mit mindestens einem Stützrad (5), das über Schwenklagerungen (12, 40) mit dem Verbindungsrahmen (14) verbunden ist,
**dadurch gekennzeichnet,**
**dass** die Schwenklagerung (12) für den vorderen Pflugrahmen (6) am Vorderteil (3) eines Verbindungsrahmens (14) vorgesehen ist, der zweiteilig ausgebildet ist, während die Schwenklagerung (40) für den hinteren Pflugrahmen (32) am Hinterteil (20) des Verbindungsrahmens (14) vorgesehen ist, wobei das Vorderteil (3) und das Hinterteil (20) über ein mindestens zwei Freiheitsgrade zulassendes Gelenk (90) miteinander verbunden sind und dass am Fahrwerk (4) ein Kniehebel (21) über die Querachse (86) gelagert ist, der über mindestens ein Stellteil (55) verschwenkbar ausgebildet ist.

2. Aufsattel- bzw. Anhängedrehpflug nach Anspruch 1,
**dadurch gekennzeichnet,**
**dass** der Kniehebel (21) das Hinterteil (20) des Verbindungsrahmens (14) und damit den hinteren Pflugrahmen über eine oder mehrere Streben (59), die zum einen im Abstand zur Querachse (86) am Kniehebel und zum anderen am Hinterteil (20) im Abstand zum Gelenk (90) angreifen und um das Gelenk (90) hochschwenkend ausgebildet ist.

3. Aufsattel- bzw. Anhängedrehpflug nach einem der vorhergehenden Ansprüche,
**dadurch gekennzeichnet,**
**dass** das Vorderteil (3) und das Hinterteil (20) des Verbindungsrahmens (14) über das Gelenk (90) mit kulissenförmiger Führung (25) mit Achse (90'), kardanisch, verdrehfest und begrenzt verschiebbar miteinander verbunden sind.

4. Aufsattel- bzw. Anhängedrehpflug nach einem der vorhergehenden Ansprüche,
**dadurch gekennzeichnet,**
**dass** das Stellteil (55) als Hydraulikzylinder ausgebildet ist.

5. Aufsattel- bzw. Anhängedrehpflug nach einem der vorhergehenden Ansprüche,
**dadurch gekennzeichnet,**
**dass** die Verschiebbarkeit des Vorderteils (3) und des Hinterteils (20) des Verbindungsrahmens (14) zueinander durch mindestens einen Anschlag (26) begrenzbar ausgebildet ist.

6. Aufsattel- bzw. Anhängedrehpflug nach einem der vorhergehenden Ansprüche,
**dadurch gekennzeichnet,**
**dass** der Kniehebel (21) um eine Querachse (86) schwenkbar mit dem Ausleger (22) des Fahrwerkes (4) im Abstand zur Querachse (86) die über eine weitere Querachse (89) schwenkbar mit den Streben (59) verbunden sind, wobei die Streben (59) am gegenüberliegenden Ende mit der hinteren Schwenklagerung (40) über eine Querachse (92) verbunden sind, und zwar im Abstand zum Gelenk (90) der kulissenförmigen Führung (25).

7. Aufsattel- bzw. Anhängedrehpflug nach einem der vorhergehenden Ansprüche,
**dadurch gekennzeichnet,**
**dass** am Kniehebel (21) im Abstand zur Querachse (86) des Kniehebels (21) eine Zugachse (48) mit Rolle (43) angeordnet ist, mit der der hintere Pflugrahmen (32) mittelbar über das Hinterteil (20) des Verbindungsrahmens (14), die Schwenklagerung (40) und den Stützarm (41) ziehbar mit dem Vorderteil (3) des Verbindungsrahmens (14) verbunden ist.
